# EUROPÄISCHE PATENTSCHRIFT

(11) **EP 2 155 968 B1**
(45) Veröffentlichungstag und Bekanntmachung des Hinweises auf die Patenterteilung: **08.08.2018**
(21) Anmeldenummer: 08773510.6
(22) Anmeldetag: 19.06.2008
(51) Int. Cl.: E01C 19/48, G05D 1/02

(54) **EINBAUZUG ZUM ERSTELLEN EINER BETON- ODER ASPHALT-BELAGSCHICHT**
PAVING TRAIN FOR APPLYING A COVER LAYER MADE OF CONCRETE OR ASPHALT MATERIAL
TRAIN DE FINISSEUSES POUR LA FABRICATION D'UNE COUCHE DE REVÊTEMENT ROUTIER EN BÉTON OU EN ASPHALTE

(30) Priorität: 21.06.2007 EP 07110745
(43) Veröffentlichungstag der Anmeldung: 24.02.2010
(73) Patentinhaber: Leica Geosystems AG, 9435 Heerbrugg (CH)
(72) Erfinder: FRITZ, Matthias, D-53545 Linz (DE)
(74) Vertreter: Kaminski Harmann
(86) Internationale Anmeldenummer: PCT/EP2008/004922
(87) Internationale Veröffentlichungsnummer: WO 2008/155113

(56) Entgegenhaltungen:
- EP-A- 0 541 417
- EP-A- 1 708 065
- EP-A- 1 818 747
- DE-U1- 9 313 075
- FR-A- 2 541 853
- FR-A- 2 671 412
- US-A- 5 921 708
- US-A1- 2002 165 649

## Beschreibung

Die Erfindung betrifft einen Einbauzug zum Erstellen einer Belagschicht aus Beton- oder Asphalt-Material nach dem Oberbegriff des Anspruchs 1.

Als Einbauzug werden zwei oder mehr im Verband fahrende Einheiten zum Einbau von Beton- oder Asphalt-Material und Erstellen einer kontinuierlichen Belagschicht mit einem gewünschten Oberflächenverlauf entlang eines vorgegebenen Weges bezeichnet. Solche Einbauzüge finden insbesondere im Verkehrsflächen-Bau, wie beim Erstellen und Reparieren von Strassen und Plätzen, Anwendung. Die im Einbauzug eingesetzten Einheiten stellen beispielsweise wenigstens einen Verteiler und wenigstens einen Fertiger - wie einen Gleitschalungsfertiger oder einen Asphalt-Fertiger - dar. Ebenfalls bekannt ist der Einsatz von zwei oder mehr Fertigern in einem Einbauzug. Dem Fertiger folgt im Allgemeinen noch ein Sprühfahrzeug, das Chemikalien auf den Belag sprüht, die ein zu schnelles Trocknen des Materials verhindern.

Üblicherweise wird beim Einbauvorgang das einzubauende Material mit einer Beschickereinheit, wie einem Lastkraftwagen oder einer Mischmaschine, angeliefert und entlang des vorgegebenen Weges abgeladen. Der Verteiler ist mit einem Verteilorgan, wie einer Schnecke, zum Verteilen des Materials ausgestattet und führt eine Querverteilung und im Allgemeinen auch eine erste Glättung des Materials durch. Die grobe Glättung erfolgt mittels einer Abziehvorrichtung des Verteilers derart, dass bereits in etwa die gewünschte Höhe der Belagschicht erreicht wird. Dem Verteiler in einem vorgebbaren Abstand nachlaufend zieht dann der Fertiger das Material mittels seiner charakteristischen Bohle, die beispielsweise eine Glättebohle sein oder ein Profil aufweisen kann, so ab, dass die gewünschte Höhe der Belagschicht mit gattungsgemässer Genauigkeit - im Millimeter Bereich - erreicht wird.

Um den Einbauzug entlang des vorgegebenen Weges zu führen und gegebenenfalls auch zur vertikalen Positionierung der Arbeitsteile der Einheiten - wie der Einbaubohle, der Abziehvorrichtung und dem Verteilorgan - ist es üblich, eine Referenzlinie - z.B. ein Drahtseil - zu spannen, entlang welcher eine Führung erfolgt, siehe z.B. US 5 921 708 A1. Diese erfolgt über Abstandsfühler, die mit der Steuerungsautomatik der Maschinen verknüpft sind. Dem hintersten Fertiger nachlaufende Einheiten - wie das Sprühfahrzeug - verwenden im Allgemeinen nicht die Referenzlinie zur Entlangtastung, sondern die eingebaute Belagschicht.

Alternativ zur Referenzlinien-Abtastung wird der Fertiger über ein Positions- bzw. Lagebestimmungssystem gesteuert. Beispielsweise wird die Position des Fertigers über ein auf demselben angeordnetes Positionselement - oder mehrere Positionselemente - bestimmt. Dieses ist z.B. ein GPS-Empfänger, der Positionsdaten von Satelliten empfängt, oder ein Reflektor, dessen Position mittels einer Totalstation gemessen wird. Die so ermittelte Position wird - z.B. in einem Geländemodell - mit einer Soll-Position verglichen, wobei aus dem Vergleich Steueranweisungen abgeleitet werden. Die Steueranweisungen beziehen sich auf die Richtungssteuerung/Lenksteuerung der Fertigereinheit, auf die vertikale Positionierung - Arbeitshöhe - der Bohle und ggf. auf die horizontale ein- oder zweidimensionale Ausrichtung der Fertigereinheit und der Bohle. Die Bestimmung der Arbeitshöhe kann je nach Anbringung des Positionselementes aus der Position desselben oder über eine zusätzliche Referenzbestimmung erfolgen.

Derartige Verfahren und Vorrichtungen zur Steuerung eines Fertigers und/oder der Arbeitshöhe von dessen Einbaubohle sind beispielsweise in der EP 1 079 029 beschrieben.

Diese Positions- oder Lagebestimmungsverfahren zur Steuerung sind für hohe Genauigkeiten hinsichtlich der zu erstellenden Belagschicht entwickelt und benötigen dementsprechend komplexe Komponenten und Datenverarbeitungsmethoden. Daher werden nur die mit höchster Genauigkeit arbeitenden Fertiger derart gesteuert. Nun entsteht dadurch die Situation, dass der Fertiger hochpräzise über ein Positions- oder Lagebestimmungssystems gesteuert wird, die restlichen Einheiten des Einbauzugs jedoch zur Steuerung immer noch das weniger komplexe, dafür aber äusserst arbeitsaufwändige Referenzlinien-Verfahren benötigen. Das Referenzlinien-Verfahren erfordert ein Ausmessen und Abstecken der zu bearbeitenden Fläche vor Beginn der Einbauarbeiten. Diese aufwändige Vorbereitung muss trotz alternativer Steuerung des Fertigers - beispielsweise einzig für einen Verteiler - getroffen werden.

Es ist daher eine Aufgabe der Erfindung, den Nachteil des Standes der Technik zu beheben und eine weniger aufwändige Lösung für die Steuerung der Einheiten eines Einbauzugs bereitzustellen.

Diese Aufgabe wird durch die Gegenstände des Anspruchs 1 oder der abhängigen Ansprüche gelöst bzw. die Lösungen weitergebildet.

Erfindungsgemäss wird dem Einbauzug mit wenigstens einer ersten Einheit, wie einem Verteiler, und wenigstens einer zweiten Einheit, wie einem Fertiger, ein optisches Leitsystem mit einer Sendekomponente und einer Empfangskomponente zugeordnet. Die Sendekomponente emittiert optische Referenzstrahlen bzw. Leitstrahlen, welche mittels der Empfangskomponente empfangen werden. Die Empfangskomponente weist dabei mehrere Empfangsbereiche zur Detektion der Referenzstrahlen auf und ist zur Ermittlung einer oder mehrerer Auftreffpositionen der Referenzstrahlen auf der Empfangskomponente ausgebildet. Anhand dieser ermittelten Auftreffposition bzw. Auftreffpositionen leitet eine Rechenkomponente Steueranweisungen für die erste und/oder zweite Einheit ab und stellt diese Steueranweisungen bereit.

Dazu sind die Sendekomponente zur mittel- oder unmittelbaren Befestigung an der zweiten Einheit und die Empfangskomponente zur mittel- oder unmittelbaren Befestigung an der ersten Einheit ausgebildet. In einer ersten Ausführungsform der Erfindung ist die Sendekomponente an der zweiten Einheit derart angeordnet, dass sie die Bewegungen der zweiten Einheit mitvollzieht und über die optischen Strahlen sozusagen extrapoliert. Die Referenzstrahlen übertragen somit die durchgeführten Bewegungen der zweiten Einheit von dieser zur ersten Einheit. Die optischen Strahlen sind Zeiger bzw. eine Referenz für die Fahrtrichtung der ersten Einheit, deren horizontale Längs- und/oder Querneigung oder die Arbeitshöhe des Arbeitsteils. Der Empfang der Strahlen mittels der an der ersten Einheit angeordneten Empfangskomponente ermöglicht die Ableitung entsprechender Steuerbefehle hinsichtlich deren Fahrtrichtung, horizontaler Längs- und/oder Querneigung und Arbeitshöhe des Arbeitsteils bzw. ggf. der Arbeitsteile. Es ist natürlich auch möglich, die Empfangskomponente mittel- oder unmittelbar an der zweiten Einheit und die Sendekomponente mittel- oder unmittelbar an der ersten Einheit anzuordnen.

Insbesondere wird durch die Rechenkomponente des erfindungsgemässen optischen Leitsystems aus der mindestens einen Auftreffposition der Referenzstrahlen auf der Empfangskomponente eine relative Lage der beiden Einheiten zueinander ableitet. Beispielsweise kann dabei eine relative horizontalen Ausrichtung der beiden Einheiten zueinander, eine relative Höhe der beiden Einheiten zueinander, ein Parallelversatz bezüglich der Fahrtrichtung zwischen den beiden Einheiten, eine relative Schräglage der beiden Einheiten zueinander und/oder ein Abstand zwischen den beiden Einheiten in Fahrtrichtung abgeleitet werden.

Erfindungsgemäss wird demnach der die Referenzstrahlen projizierende Laser-Sender nicht - wie nach dem Stand der Technik bekannt - im Gelände aufgestellt, sondern wird an einer der beiden Einheiten des Einbauzuges angebracht. Dadurch kann verbessert eine relative Abstimmung der beiden Einheiten aufeinander erfolgen. Zudem sind kein Nachrücken der referenzlinienprojizierenden Sendekomponente im Gelände und keine aufwändige Installation einer Referenzlinie entlang des gesamten Einbauweges notwendig, da der Einbauzug das Leitsystem zum Abstimmen der Einheiten aufeinander - z.B. bezüglich Einbauhöhe und/oder Fahrtrichtung - quasi mitführt.

Insbesondere fährt die erste Einheit im Einbauzug vor der zweiten Einheit. Sie stellt beispielsweise eine Verteilereinheit dar, die Beton oder Asphalt als Einbaugut entlang des vorgegebenen Weges ausbringt und Querverteilung des Materials durchführt. Die Verteilereinheit ist ein auf übliche Art und Weise ausgebildeter und ausgestatteter Verteiler, beispielsweise mit einem ersten Arbeitsteil, wie einer Schnecke, zur Verteilung des Materials und mit Seitenschalungen, um das Material entlang einer vorgegebenen Breite zu verteilen. Im Allgemeinen weisen solche Verteiler ausserdem eine Abziehvorrichtung - Bohle - als weiteres Arbeitsteil auf, um das Material abzuziehen, sodass die Materialschicht bereits in etwa in der gewünschten Höhe erstellt wird.

Die erste Einheit kann auch eine Fertigereinheit sein. So fahren beispielsweise beim zweilagigen oder mehrlagigen Einbauen von Belagschichten zwei bzw. mehrere Fertiger nacheinander im Einbauzug.

Die zweite Einheit ist insbesondere eine Fertigereinheit, wie ein Gleitschalungsfertiger oder ein Asphaltfertiger, mit einer Bohle als - zweitem - Arbeitsteil. Die Bohle ist eine übliche Glättebohle oder eine Bohle mit einem Profil. Um verschieden hohe Materialbeläge zu erstellen, ist die Bohle eines Fertigers höhenverstellbar. Ist die Bohle am Rahmen des Fertigers starr befestigt, erfolgt die Höhenverstellung im Allgemeinen über die Fahrwerke - wie Raupen oder Räder - des Fertigers, die z.B. über Zylinder höhenverstellbar sind. Breite Bohlen, die durchhängen können, sind oft auch noch mittig über einen höhenverstellbaren Zylinder einstellbar. Bei Fertigern, bei denen die Bohle über schwenkbare Träger am Rahmen befestigt ist, erfolgt die Höhenverstellung in bekannter Art und Weise über eine Höhenverstellvorrichtung, wie Hydraulikzylinder.

Die Steuerung von einer der beiden Einheiten des Einbauzuges - insbesondere des Fertigers - kann durch einen Fahrer erfolgen, der den Fertiger entlang des vorgegebenen Weges lenkt und die entsprechenden Einstellungen bezüglich der Neigung des Fertigers und/oder der Bohle und der Einbauhöhe der Bohle trifft. Vorteilhaft wird ein Positions- oder Lagebestimmungssystem zur Kontrolle des Fertigers eingesetzt. Dies kann ein GPS-System sein, das mittels eines am Fertiger angebrachten GPS-Empfängers die räumliche Lage des GPS-Empfängers und damit des Fertigers erfasst. Ebenso kann ein laserbasiertes System verwendet werden. Beispielsweise wird mittels eines oder mehreren im Gelände positionierten Theodoliten oder Totalstationen die Position oder Lage eines oder mehrerer am Fertiger angebrachter Reflektoren bestimmt. Dabei kann nun über das Positionsbestimmungssystem - insbesondere die Totalstation oder das GPS - die absolute Position der einen Einheit bestimmt werden, sodass anhand dieser absoluten Position und der - durch das relative optische Leitsystem abgeleiteten - relativen Lage der beiden Einheiten zueinander ein Bezug der relativen Positionen beider Einheiten zu einem äusseren Koordinatensystem herstellbar ist.

Im Folgenden wird die erste Einheit als Verteiler und die zweite Einheit als Fertiger bezeichnet. Dies dient jedoch lediglich der Vereinfachung und schliesst keineswegs die Ausführung der Erfindung mit alternativen, in einem Einbauzug fahrenden Einheiten aus.

Erfindungsgemäss weist der Einbauzug das vorgängig erwähnte optische Leitsystem zum Bereitstellen von Steueranweisungen - in einer Ausführungsform zum Extrapolieren der Steueranweisungen des Fertigers zum Verteiler - auf. Die Steueranweisungen können aus der Detektionsposition auf der Empfangskomponente bestimmt werden. Z.B. werden Sende- und Empfangskomponente relativ zueinander derart angeordnet und eingestellt, dass jeder Punkt auf der Empfangskomponente einer Richtung und/oder Höhe entspricht. Ist die Empfangskomponente nicht als Detektor ausgebildet, sondern z.B. als reflektives Element, und die Sendekomponente zusätzlich zum Empfang reflektierter Strahlung, so können die Steueranweisungen auch aus der empfangenen reflektierten Strahlung bestimmt werden. Beispielsweise kann die Rechenkomponente zur Bereitstellung der aus dem Auftreffpunkt abgeleiteten Daten an eine Anzeige ausgebildet sein, sodass die Steueranweisungen für die erste Einheit einen Benutzer bereitgestellt werden. Die empfangenen Strahlen können dann einem Bediener angezeigt werden, z.B. auf einem Monitor, wobei der Bediener dann händisch eine entsprechende Steuerung auslösen kann. Beispielsweise ist auf dem Monitor ein Koordinatensystem dargestellt, in welches die Empfangskomponente eingebettet ist. Die empfangenen Strahlen bzw. eine Auftreffposition der Strahlen werden dann im Koordinatensystem angezeigt. Als Ableiten und Bereitstellen der Steueranweisungen durch die Rechenkomponente kann somit im Rahmen der Erfindung auch verstanden werden, dass der Auftreffpunkt bzw. die Auftreffpunkte der Referenzstrahlen auf der Empfangskomponente einem Benutzer angezeigt werden und dieser selbst die Steuerung händisch durchführt.

Allerdings können Steuerbefehle bzw. Steueranweisungen ebenso durch die Rechenkomponente direkt aus dem Auftreffpunkt ermittelt und automatisch an eine Steuereinheit der ersten Einheit gesendet werden, sodass die Steueranweisungen automatisch ausgeführt werden können.

Die Sendekomponente ist als Referenzstrahlgenerator zum Erzeugen von Leitstrahlen respektive Referenzstrahlen ausgebildet und umfasst vorteilhaft eine oder mehrere Laserkomponenten zur gerichteten Emission von Laserstrahlen. Mit optischen Elementen, wie z.B. Linsen, können die Laserstrahlen aufgeweitet werden, sodass die Sendekomponente beispielsweise fächerförmig oder kreisförmig aufgeweitete Laserstrahlen als Leitstrahlen bereitstellt. Dies erleichtert - gegenüber einem kollimierten Laserstrahl - insbesondere die Detektion und ggf. die Auswertung respektive Messgenauigkeit. Die Sendekomponente kann auch als Linienlaser, Rotationslaser oder als sogenannter Kreuzlaser ausgeführt sein. Um den Abstand und ggf. Steueranweisungen in Bezug auf den Abstand zwischen Verteiler und Fertiger zu ermitteln, umfasst die Sendekomponente einen Laserentfernungsmesser. Die Sendekomponente kann auch mehrere - ggf. alternative - Komponenten zur Emission der Leitstrahlen aufweisen. So können für die Indikation der Fahrtrichtung, der ein- oder zweidimensionalen Neigung, der Arbeitshöhe von Arbeitsteilen und des Abstand separate Komponenten vorgesehen sein.

Es kann aber auch eine Komponente derart ausgebildet sein, dass mehrere Anweisungen ableitbar sind. Z.B. kann mit einem Kreuzlaser eine Fahrtrichtung und eine Höhe angezeigt werden. Ein Linienlaser ist ausbildbar, um eine Waagrechte und eine Senkrechte zu projizieren - damit sind ebenfalls Fahrtrichtung und Höhe durch die projizierten Linien darstellbar. Durch linienförmige Projektionen ist auch die horizontale ein- oder zweidimensionale Neigung des Fertigers bestimmbar.

Die von der Sendekomponente emittierten Leitstrahlen bzw. Referenzstrahlen werden von der Empfangskomponente empfangen. Damit wird die Relativposition und/oder -orientierung von Sende- und Empfangskomponente erfasst - und aufgrund der definierten Zuordnung der Komponenten zum Fertiger und Verteiler auch die Relativposition und/oder -orientierung des Fertigers und Verteilers. Beim Empfang auf photosensitiven positionsempfindlichen Detektionselementen sind die Steueranweisungen für den Verteiler aus der Position der detektierten Leitstrahlen auf den Detektionselementen ableitbar. Bei einer Photodiode als Empfangskomponente kann der Verteiler so gesteuert werden, dass die Photodiode immer Strahlung empfängt. Zur Messung des Abstands zwischen Fertiger und Verteiler kann die Empfangskomponenten ein reflektives Element, vorzugsweise einen Retroreflektor, aufweisen.

Die Empfangskomponente kann als optischer Detektor, wie als Photodetektor, Anordnung von Lasersensoren, oder Bildaufnahmegerät ausgebildet sein. Dabei umfasst die Empfangskomponente eine flächige Anordnung photosensitiver Bereiche, sodass ein oder mehrere Auftreffpunkte der Referenzstrahlen auf der Empfangskomponente ermittelt werden kann. Zusätzlich wird dadurch die Wahrscheinlichkeit, den Leitstrahl zu verlieren, vermindert. Beispielsweise können CCD-, CMOS- oder PSD-Sensoren eingesetzt werden. Wird eine Belagschicht einheitlicher Höhe so im ebenen Gelände erstellt, dass keine Variation in der Höhe erfolgt, so sind die Leitstrahlen auch mit linear, insbesondere senkrecht zur Fahrtrichtung, angeordneten Detektionselementen, wie einem CCD-Zeilenarray, mit hoher Wahrscheinlichkeit ohne Unterbrechung detektierbar. Für Anwendungen, bei denen ein gerader Weg im ebenen Gelände erstellt wird, bietet ein Leitsystem mit einem Laser zur Emission eines kollimierten Strahls und einer Photodiode zum Empfang des Strahls ausreichende Zuverlässigkeit.

Die erste Ausführungsform der Erfindung ist insbesondere für Anwendungen geeignet, bei denen der vorgegebene Weg keine starken Richtungsänderungen zeigt. Dies ist bei den üblichen Anwendungen, wie bei Autobahnen oder Flughäfen, im Allgemeinen der Fall. Die zu bearbeitenden Oberflächen zeigen meist keine oder nur schwache Änderungen der Geometrien. Der Abstand, in dem der Fertiger hinter dem Verteiler fährt, beträgt im Allgemeinen zwischen 3 m und 30 m. Bei einem kleinen Abstand treffen die Leitstrahlen auch in Kurven - die für oben beschriebene Anwendungen Radien im Bereich von 500 m bis 1000 m haben - auf die Empfangskomponente. Wenn der Verteiler in grösserem Abstand vor dem Fertiger fährt - was beispielsweise notwendig sein kann, wenn zuviel Einbaumaterial geliefert wurde - so funktioniert das optische Leitsystem für den Fahrtweg entlang einer Geraden gattungsgemäss genau. Vor einer Kurve kann der Verteiler seine Fahrgeschwindigkeit verlangsamen, sodass der Abstand verkleinert wird und die Detektion auch in der Kurve noch erfolgt.

Häufig kommt es vor, dass vor Beginn der Arbeiten der Anstellwinkel der Bohle des Fertigers verändert wird. Ist die Sendekomponente fest derart am Fertiger angebracht, dass sie durch die Verstellung verkippt bzw. höhenverstellt wird, so könnte dies zu Fehlanzeigen hinsichtlich der Höhe führen. Indem die Empfangskomponente - z.B. auf einer Schiene - verschiebbar montiert ist, kann eine entsprechende Anpassung vor Beginn der Arbeiten durchgeführt werden. Ebenso kann natürlich die Sendekomponente verstellbar sein.

Die Sende- und Empfangskomponente bzw. -komponenten sind dem Fertiger und/oder dem Verteiler zugeordnet. Beispielsweise erfolgt eine Fixierung der Komponenten über Halteelemente am Rahmen des Fertigers bzw. Verteilers. Die Halteelemente können senkrecht auf die Rahmenebene des Fertigers bzw. Verteilers stehen. Ebenfalls kann eine Anbringung derart erfolgen, dass die Komponenten seitlich über die jeweiligen Rahmen hinausragen, sodass der Strahlgang nicht durch - z.B. Bedienpersonen auf den Fahrzeugen - unterbrochen wird. Soll die Arbeitshöhe des Arbeitsteils des Fertigers durch die Sendekomponente angezeigt werden, so kann die Sendekomponente - bzw. wenigstens eine Komponente derselben - auch auf dem Arbeitsteil angebracht sein. Ist das Arbeitsteil mit dem Fertigerrahmen fest verbunden, so genügt die Anbringung am Fertigerrahmen, wobei ggf. bei der Ableitung der Steueranweisungen in Bezug auf die Höhe Werte eines zusätzlichen Sensors, wie eines am Rahmen angeordneten Neigungssensors, herangezogen werden können, um die Genauigkeit zu steigern. Bei einer über Stellarme mit dem Fertiger verbundenen Bohle kann ein Referenzsensor die Relativposition von Bohle und Fertiger bestimmen, welche dann zur auf der Empfangskomponente angezeigten Höhe addiert wird. Die Sendekomponente oder die Empfangskomponente kann auf dem Fertiger möglichst nahe den Fahrwerken angebracht sein, sodass das System sehr sensitiv ausgelegt ist und damit schnell auf Richtungsänderungen reagieren kann.

In einer weiteren Ausführungsform der Erfindung weist das optische Leitsystem weiters eine vollautomatische Speicher- und Rechenkomponente auf. In dieser Ausführungsform folgen Sende- oder Empfangskomponente nicht mehr den Bewegungen des Fertigers, sondern werden entsprechend berechneten Steueranweisungen - laufend - eingestellt. Zur Bestimmung der Einstellung/en werden die Position oder Lage des Fertigers, der Abstand zwischen Fertiger und Verteiler, die daraus abgeleitete Position des Verteilers und dessen Soll-Position - und ggf. Soll-Arbeitshöhe und Soll-Lage desselben - hinsichtlich des vorgegebenen Weges zur Berechnung der Steueranweisungen verwendet.

Der Verteiler ist in einem vorgegebenen bzw. bekannten Abstand vor dem Fertiger fahrbar. Eine Einhaltung des Abstands kann mit üblichen Methoden kontrolliert werden - z.B. durch Geschwindigkeitsmessung. Ebenfalls kann ein Entfernungsmesser zur Messung des Abstands vorgesehen sein. Der Entfernungsmesser ist z.B. wie vorgängig erwähnt Bestandteil des optischen Leitsystems. Die Messung kann in an die Anforderungen bzw. Gegebenheiten angepassten Intervallen erfolgen.

In der Speichereinheit des Leitsystems ist ein Modell abgespeichert, welches den vorgegebenen Weg und die - zur Erstellung desselben erforderlichen - Soll-Positionen im Gelände respektive entlang des Weges von Verteiler und Fertiger darstellt. Aus der anhand eines Positions- oder Lagebestimmungssystems bestimmten Position oder Lage des Fertigers ist dieser in Hinsicht auf die dem Geländemodell entnehmbaren Soll-Werte steuerbar. Die Positions- oder Lageinformation über den Fertiger wird nun in der Recheneinheit weiters verwendet, um Einstellungen der Sende- und/oder Empfangskomponenten zum Bereitstellen von Steueranweisungen in Hinsicht auf die Soll-Werte des Verteilers zu berechnen. Aus der bekannten Ist-Position oder Ist-Lage des Fertigers, sowie dem bekannten Relativabstand von Fertiger und Verteiler kann die Ist-Position des Verteilers abgeleitet werden. Dem Geländemodell kann dann die an der entsprechenden Ist-Position des Verteilers vorgegebene Soll-Fahrtrichtung und ggf. die SollHöhe des Arbeitsteils oder der Arbeitsteile und die Soll-Ausrichtung des Verteilers entnommen werden.

In der Rechenkomponente sind diese Steueranweisungen als Einstellwerte der Sende- und/oder Empfangskomponente berechenbar. Die Sende- und/oder Empfangskomponente wird dann - vorzugsweise automatisch - derart eingestellt, dass die Steueranweisungen unter Berücksichtigung der Ist-Position oder Ist-Lage des Fertigers bereitgestellt werden. Die Einstellung kann über eine automatische Steuerung der Sende- und/oder Empfangskomponente erfolgen, wobei Sende- und/oder Empfangskomponente mit einem Steuermechanismus ausgestattet sind. Bei jeder neuen Berechnung wird die Einstellung aktualisiert.

Die Erfindung wird nachfolgend anhand von in den Zeichnungen schematisch dargestellten Ausführungsbeispielen rein beispielhaft näher beschrieben. Im Einzelnen zeigen
- Figur 1: eine erste und zweite Einheit eines Einbauzugs mit einer ersten Ausführungsform eines optischen Leitsystems gemäss der Erfindung;
- Figur 2: eine erste und zweite Einheit eines Einbauzugs mit einer zweiten Ausführungsform eines optischen Leitsystems gemäss der Erfindung;
- Figur 3: eine erste und zweite Einheit eines Einbauzugs mit einer dritten Ausführungsform eines optischen Leitsystems gemäss der Erfindung;
- Figur 4: eine erste und zweite Einheit eines Einbauzugs mit einer vierten Ausführungsform eines optischen Leitsystems gemäss der Erfindung;
- Figur 5: schematisch eine weitere Ausführungsform der Erfindung;
- Figur 6: ein Ausführungsbeispiel für eine Sendekomponente;
- Figur 7: in acht Teilfiguren 7A bis 7H Ausführungsbeispiele für eine Empfangskomponente bzw. für empfangene Leitstrahlen;

Die Darstellungen in den Figuren sind nicht als massstäblich zu betrachten. Insbesondere sind Darstellungen der Komponenten des optischen Leitsystems und Positionsbestimmungskomponenten im Verhältnis zu den Einheiten des Einbauzugs vergrössert dargestellt.

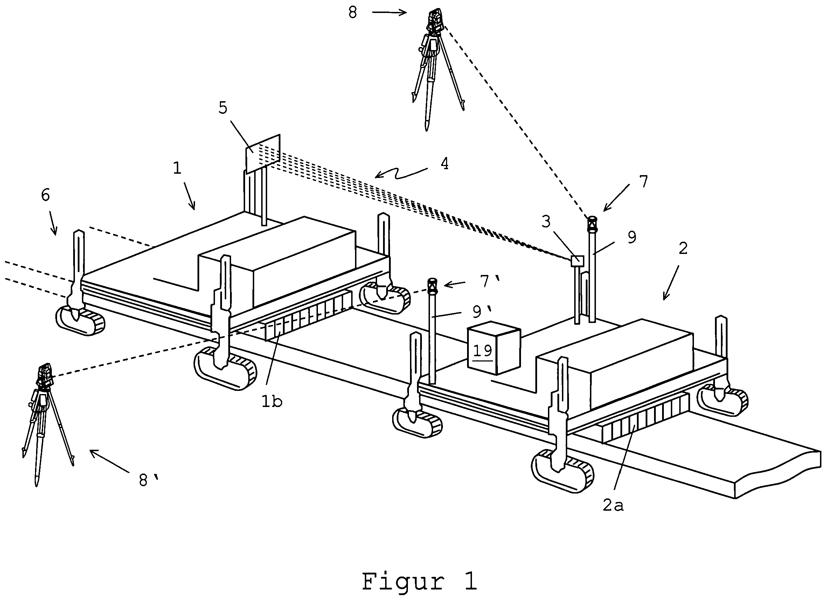

In Figur 1 dargestellt sind eine erste Einheit 1 und zweite Einheit 2 eines Einbauzugs in Arbeitsstellung. Die erste Einheit 1 stellt einen Verteiler - "spreader" - dar, die zweite Einheit 2 einen Gleitschalungsfertiger mit einer Glättebohle 2a als zweites Arbeitsteil. Nicht gezeigt ist eine Beschickereinheit, die das Material anliefert und vor dem Verteiler entlang des vorgegebenen, zu bearbeitenden Weges 6 ausbringt. Die Beschickung erfolgt beispielsweise konventionell aus Lastkraftwagen. Allgemein können Verteiler bzw. Fertiger auch Bunker für das Einbaumaterial aufweisen, sowie eine Fördervorrichtung zum Fördern des Materials nach hinten vor die Bohle. Die erste Einheit 1 des Einbauzugs - der Verteiler - verteilt das Material mittels eines ersten, in der Figur nicht gezeigten, Arbeitsteils quer über den vorgegebenen Weg 6. Der Weg kann beispielsweise 16 m breit sein. Mit einer Abziehbohle 1b als weiteres Arbeitsteil zieht der Verteiler das Material ab und glättet es grob. Der dem Verteiler nachlaufende Gleitschalungsfertiger glättet dann die z.B. noch um einige Zentimeter zu hohe Materialschicht mit der Glättebohle 2a, sodass eine vorgegebene Höhe der Schicht auf Millimeter genau erreicht wird. Nach dem Gleitschalungsfertiger fährt dann beispielsweise noch ein - nicht gezeigtes - Sprühfahrzeug, dass sich entlang der eingebauten Materialschicht tastet.

Da der Gleitschalungsfertiger die Richtung und Höhe des vorgegebenen Weges mit höchster Genauigkeit erstellen muss, ist eine entsprechend präzise Steuerung desselben erforderlich. Um den Gleitschalungsfertiger gattungsgemäss genau zu steuern, sind zwei Reflektoren 7,7' als Positionsindikatoren über Halteelemente 9,9' am Gleitschalungsfertiger fest angebracht. Mit zwei im Gelände angeordneten Tachymetern 8,8' wird die Position der Reflektoren 7,7' erfasst. Aus dieser Positionsbestimmung und der bekannten Lagebeziehung zwischen Reflektoren 7,7' und Gleitschalungsfertiger ist die Position desselben ableitbar. Die abgeleitete Position wird mit einer vorgegebenen Soll-Position der Gleitschalungsfertigers verglichen und der Gleitschalungsfertiger entsprechend gesteuert.

Da die Glättebohle 2a des Gleitschalungsfertigers hier starr am Rahmen befestigt ist, kann aus der Positionsbestimmung auch die Positionshöhe der Bohle abgeleitet werden. Gegebenenfalls wird zur Erhöhung der Genauigkeit noch ein Referenzsensor eingesetzt, der die Relativposition von Glättebohle 2a und Fertiger-Rahmen zusätzlich bestimmt.

Der Gleitschalungsfertiger wird über die Reflektoren 7,7' und Tachymeter 8,8' als Positionsbestimmungssystem hochpräzise gesteuert. Um nun auch den vorauslaufenden Verteiler ohne grossen Aufwand zu steuern, ist dem Einbauzug erfindungsgemäss ein optisches Leitsystem zugeordnet. Dieses umfasst eine auf dem Gleitschalungsfertiger angeordnete Sendekomponente 3 zum Emittieren von optischen Referenzstrahlen 4 sowie eine auf dem Verteiler angeordnete Empfangskomponente 5 zum Empfangen der Referenzstrahlen 4. Die Sendekomponente 3 ist hier als Laser mit einem optischen Element zum Aufweiten des Laserstrahls ausgebildet. Der fächerförmig aufgeweitete Laserstrahl stellt die Referenzstrahlen 4 dar. Die Sendekomponente 3 ist am Gleitschalungsfertiger derart fixiert, dass die Referenzstrahlen 4 in Fahrtrichtung desselben emittiert werden. Bewegungen - wie Richtungswechsel - des Gleitschalungsfertiger werden von der Sendekomponente 3 mitvollführt und durch die Referenzstrahlen 4 entsprechend übertragen. Mit dem gezeigten fächerförmigen Laserstrahl sind die Fahrtrichtung und eine horizontale Neigung quer zur Fahrtrichtung von der hinteren auf die vordere Einheit übertragbar. Dazu wird eine Auftreffposition der Referenzstrahlen 4 auf der Empfangskomponente - anhand der mehreren Empfangsbereiche - ermittelt. Diese Auftreffposition kann nun von der Rechenkomponente 19, die beispielsweise auf der hinteren Einheit montiert sein kann, zur Ableitung und Bereitstellung der Steueranweisungen verwendet werden. Je nach Anforderungen kann die Rechenkomponente jedoch auch in andere Komponenten wie z.B. eine Displayeinheit zur Anzeige der Steueranweisungen oder in eine Steuereinheit zur automatischen Steuerung der vorderen Einheit des Einbauzugs - integriert sein.

Dabei können je nach Anordnung der einzelnen Komponenten des optischen Leitsystems die Informationssignale - wie z.B. die durch die Empfangsbereiche der Empfangskomponente erzeugten Signale, die die Informationen bezüglich der Auftreffposition enthalten, oder die durch die Rechenkomponente bereitgestellten Steueranweisungs-Signale - über entsprechende Kabelverbindungen oder auch kabellose Verbindungen (beispielsweise Bluetooth) übertragen werden.

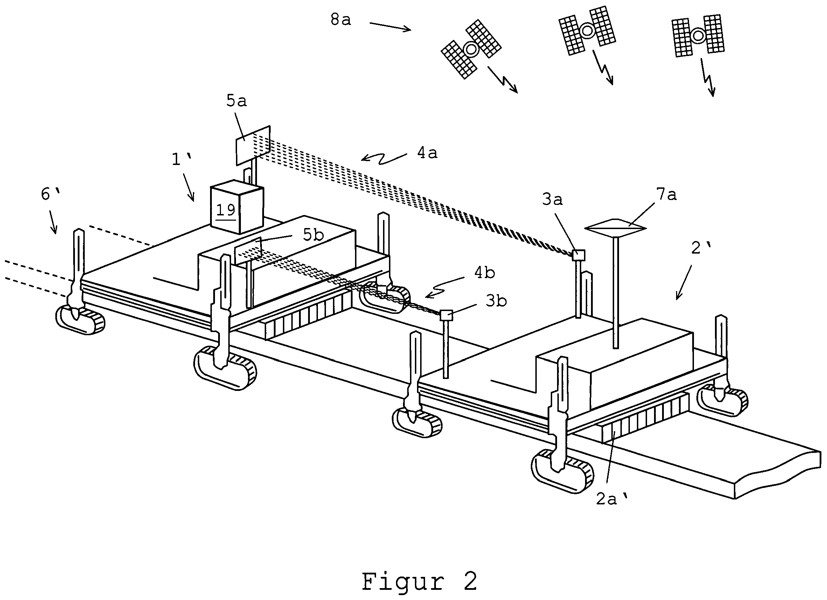

Figur 2 zeigt ebenfalls einen Verteiler 1' als erste Einheit und einen Deckenfertiger 2' als zweite Einheit, die im Verband zum Erstellen einer Betondecke entlang eines vorgegebenen Weges 6' fahren. Der Deckenfertiger 2' wird hier alternativ über ein GPS-System gesteuert. Ein als Lageindikator auf dem Deckenfertiger 2' angeordneter GPS-Empfänger 7a empfängt Signale von Satelliten 8a. Aus den empfangenen Signalen ist die räumliche Lage des GPS-Empfängers 7a und damit auch die räumliche Lage des Deckenfertigers 2' ermittelbar. Das optische Leitsystem des Einbauzuges umfasst einen ersten, auf dem Deckenfertiger 2' montierten Lasersender 3a und einen zweiten, auf dem Deckenfertiger 2' montierten Lasersender 3b als Sendekomponente, sowie einen ersten, auf dem Verteiler 1' montierten CCD-Sensor 5a und einen zweiten, auf dem Verteiler 1' montierten CCD-Sensor 5b als Empfangskomponente. Der erste Lasersender 3a emittiert einen fächerförmigen, auf den Weg 6' senkrechten Laserstrahl 4a zur Anzeige der Fahrtrichtung des Deckenfertigers 2' auf dem ersten CCD-Sensor 5a. Durch die auf den ersten CCD-Sensor 5a auftreffenden Referenzstrahlen wird dem Verteiler 1' bzw. einer Bedienperson auf dem Verteiler 1' die vorgegebene Fahrtrichtung angezeigt, insbesondere um ein Abdriften des Verteilers 1' von der vorgegebenen Fahrtrichtung zu verhindern. Der zweite Lasersender 3b emittiert einen ebenfalls fächerförmigen, auf den Weg 6' horizontalen Laserstrahl 4b zur Anzeige der Höhe des Deckenfertigers 2' bzw. der Einbauhöhe von dessen Bohle 2a'. Dabei stellt eine auf der vorderen Einheit montierte Recheneinheit 19 - die insbesondere auch in die Empfängerkomponente integriert sein kann - die Anzeige-Daten für die Benutzer-Anzeige bereit, sodass eine abgeleitete Auftreffposition der Referenzstrahlen als die Steueranweisung durch die Benutzer-Anzeige einer Bedienperson angezeigt werden kann.

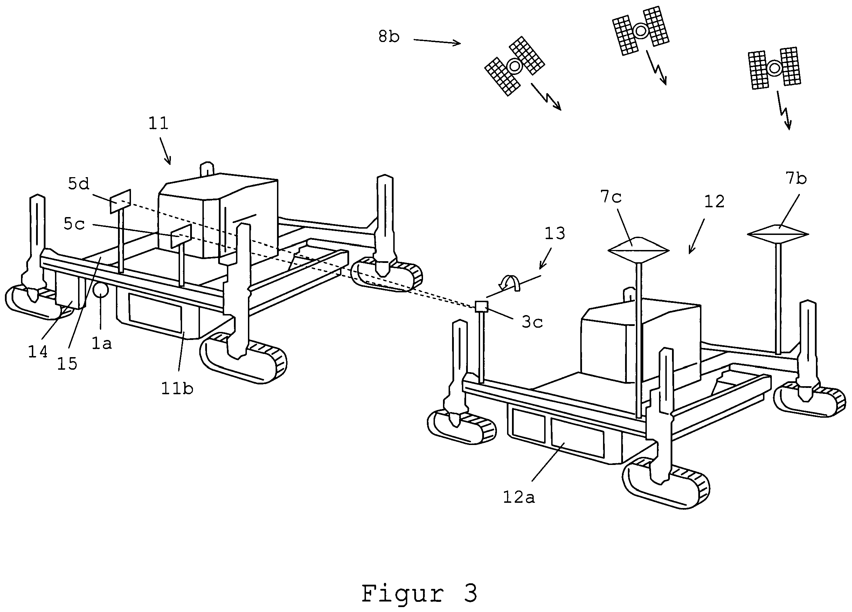

Figur 3 zeigt eine erste Einheit - einen Verteiler 11 - und eine zweite Einheit - einen Fertiger 12 - eines Einbauzugs mit einem optischen Leitsystem gemäss der Erfindung. Das optische Leitsystem umfasst einen Rotationslaser 3c als Sendekomponente und einen ersten Flächensensoren 5c mit lichtempfindlichen Bereichen und zweiten Flächensensor 5d mit lichtempfindlichen Bereichen als Empfangskomponente. Der Rotationslaser 3c dreht in Richtung des Pfeils um die gezeigte horizontale Achse 13. Dadurch wird mit dem Laserstrahl eine auf die Rahmenebene des Fertigers 12 - und Verteilers 11 - im Wesentlichen senkrechte Leitstrahlebene aufgespannt. Indem auf dem Verteiler 11 zwei Empfänger angeordnet sind, werden an zwei Positionen Leitstrahl-Signale empfangen, wodurch die Genauigkeit der Bestimmung der "extrapolierten" Fahrtrichtung des Fertigers 12 und der daraus abgeleiteten Steueranweisungen für den Verteiler 11 erhöht wird.

Der Fertiger 12 ist hier mit einem variablen Rahmen und einer Bohle 12a mit variabler Bohlenbreite ausgebildet. Die Bohle ist an den Rahmen-Längsträgern fixiert. Die RahmenQuerträger sind in der Breite verstellbar, z.B. teleskopartig ausziehbar. Dies ermöglicht insbesondere den Einsatz der Bohle 12a, deren Breite variierbar ist. Im hinteren Bereich der beiden Längsträger sind zwei GPS-Empfängerantennen 7b und 7c angeordnet. Über Satellitensignale von GPS-Satelliten 8b - die hier in ihrer Anzahl und Anordnung rein nur zur anschaulicheren Erläuterung dargestellt sind - wird die Position des Fertigers 12 bestimmt. Signalverarbeitungseinheiten können in bekannter Art und Weise positioniert sein - z.B. auf dem Fertiger 12 oder extern.

Der Verteiler 11 ist mit einer Schnecke la als erstes Arbeitsteil ausgestattet. Mittels der Schnecke 1a erfolgt eine Querverteilung des einzubauenden Materials. Um das Material in der gewünschten Breite zu verteilen, weist der Verteiler eine Seitenschalung 14 auf. Zusätzlich ist auch eine Höhenschalung 15 vorgesehen, damit die Dicke der Materialschicht bereits in etwa dem vorgegebenen Wert entspricht. Mit der Abziehbohle 11b als weiteres Arbeitsteil erfolgt eine erste Grob-Glättung der Schicht.

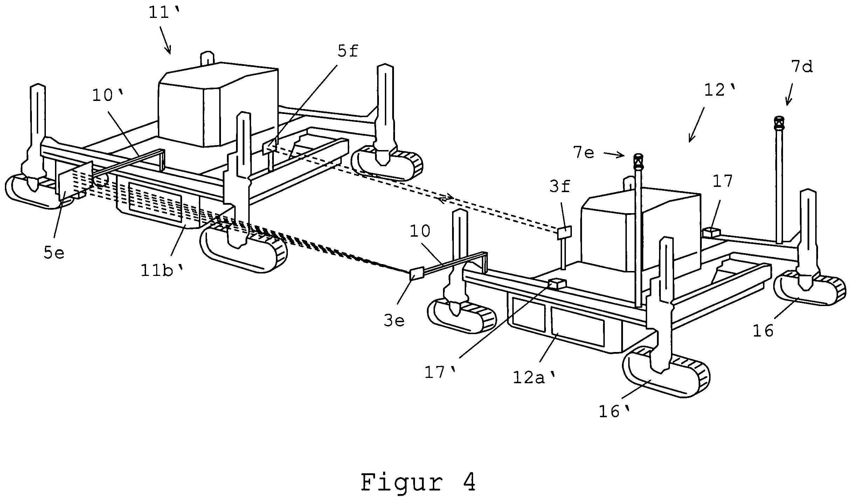

Figur 4 zeigt einen Fertiger 12' mit einer Bohle 12a' und einen Verteiler 11' mit einer Schnecke und einer Abziehbohle 11b' entsprechend Figur 3. Der Fertiger 12' weist einen ersten, am rechten Rahmen-Längsträger angebrachten Reflektor 7d und einen zweiten, am linken Rahmen-Längsträger angebrachten Reflektor 7e auf, welche Reflektoren 7d,7e Positionsindikatoren darstellen. Die Anordnung der Reflektoren 7d,7e erfolgt am - in Arbeitsrichtung des Fertigers 12' - hinteren Ende der Rahmen-Längsträger und möglichst am äusseren Rand der Träger, d.h. möglichst nahe an den Fahrwerken 16,16'. Damit wird eine hohe Sensitivität des Systems erreicht, indem sich Positionsänderungen des Fertigers 12' auf die Positionen der Reflektoren 7d,7e übertragen und das System damit auf kleinste Änderungen der Lage und Höhe des Fertigers 12' bzw. der Bohle 12a' reagiert. Weiters am Rahmen angebracht sind zwei Neigungssensoren 17 und 17', jeweils ein Neigungssensor 17 bzw. 17' auf jeweils einem Rahmen-Längsträger. Die Sensoren sind in der Mitte des Rahmens befestigt und messen sowohl die Längs- als auch die Querneigung des Rahmens bzw. Fertigers 12' bzw. der Bohle 12a'. Die Reflektoren 7d,7e auf dem Fertiger 12' werden mit einem nicht dargestellten Positionsbestimmungssystem, z.B. mit Tachymetern entsprechend Figur 1, vermessen. Mit den Informationen des Positionsbestimmungssystems und der Neigungssensoren 17,17' sind Punkte am Fertiger 12' berechenbar, anhand welcher Berechnung ein Vergleich der gemessenen Ist-Positionen mit gewünschten Soll-Positionen der Punkte durchgeführt werden kann und der Fertiger 12' - insbesondere automatisch - in Position und Orientierung steuerbar ist. Gleichzeitig wird damit die Einbauhöhe und Lage der mit dem Fertiger 12' verbundenen Bohle 12a' gesteuert.

Um Steueranweisungen für den Verteiler 11' bereitzustellen, ist ein optisches Leitsystem in einer speziellen Anordnung vorgesehen. Eine, einen divergenten, fächerförmigen Strahl aussendende Laserkomponente 3e als Sendekomponente des Leitsystems ist über ein Befestigungselement 10 derart am Rahmen eines Fertigers 12' als zweiter Einheit eines Einbauzugs angebracht, dass die Leitstrahlen 4c seitlich neben dem Fertiger emittiert werden. Ein photosensitiver Flächensensor 5e als Empfangskomponente ist entsprechend über ein Trägerelement 10' am Verteiler 11' als erster Einheit des Einbauzugs angebracht. Mit einer solchen Anordnung wird eine Unterbrechung des optischen Strahlgangs der Leitstrahlen 4c - beispielsweise durch Bedienpersonen, die sich auf den Einheiten bewegen, vermieden. Die Empfangskomponente des optischen Leitsystems umfasst in dieser Ausführungsform weiters ein reflektives Element 5f, welches am hinteren Querträger des Fertiger-Rahmens befestigt ist. Ein Laserentfernungsmesser 3f als Teil der Sendekomponente des optischen Leitsystems, emittiert Laserstrahlen gegen das reflektive Element und empfängt die reflektierten Strahlen zur Abstandsbestimmung.

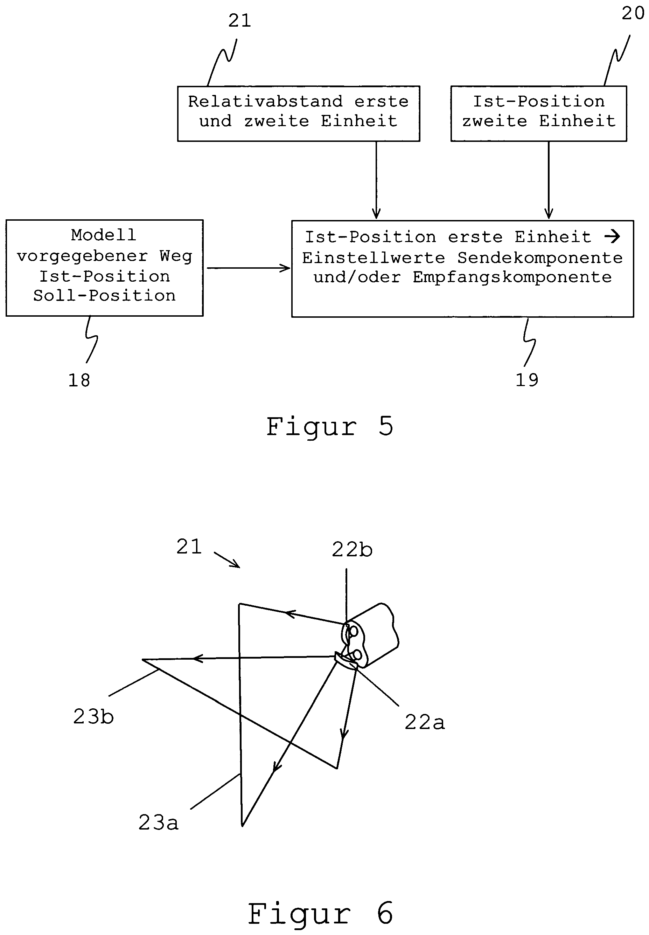

In Figur 5 sind die Komponenten eines optischen Leitsystems gemäss einer weiteren erfindungsgemässen Ausführungsform schematisch dargestellt. Es wird vorausgesetzt, dass der Abstand zwischen erster und zweiter Einheit bekannt ist. Das optische Leitsystem weist eine Sende- und Empfangskomponente, und weiters noch eine Speicherkomponente 18 und eine Rechenkomponente 19 auf. In der Speicherkomponente 18 ist ein Modell abgespeichert, welches den vorgegebenen Weg, entlang dessen eine Beton- oder Asphaltschicht erstellt werden soll, darstellt, sowie die Soll-Positionen der ersten Einheit entlang des Weges. Gegebenenfalls sind im Modell weitere Informationen gespeichert, wie das Ist- und Soll-Gelände und die Ist- und Soll-Positionen und -Ausrichtungen der Einheiten und Arbeitshöhen der Arbeitsteile.

An die Rechenkomponente werden der Abstandswert und die Informationen bezüglich der Ist-Position oder Ist-Lage der zweiten Einheit eines Positions- oder Lagebestimmungssystems 20, wie beispielsweise in den Figuren 1 bis 4 gezeigt, übermittelt. Der Abstandswert kann von einem Laserentfernungsmesser 20 an die Rechenkomponente 19 übertragen werden. Ebenso kann der Abstandswert in der Speicherkomponente 18 gespeichert und über eine Schnittstelle in die Rechenkomponente 19 eingelesen werden. Gegebenenfalls wird der Abstandswert auch manuell in die Rechenkomponente 19 eingegeben. In der Rechenkomponente 19 wird aus der Ist-Position oder Ist-Lage und dem Ist-Abstand zwischen erster und zweiter Einheit die Ist-Position der ersten Einheit berechnet. Diese Ist-Position wird mit der entsprechenden Soll-Position aus dem Modell verglichen. Unter Berücksichtigung der Ist-Position oder Ist-Lage der zweiten Einheit und der - z.B. in der Speicherkomponente 18 abgespeicherten - Relativposition von Sendekomponente und zweiter Einheit werden nun Einstellwerte für die Sende- und/oder Empfangskomponente bestimmt, sodass mittels derselben Steueranweisungen für die erste Einheit bereitstellbar sind.

In Figur 6 ist ein Ausführungsbeispiel für eine Sendekomponente eines erfindungsgemässen optischen Leitsystems dargestellt. Die Sendekomponente ist als Linienlaser 21 zur Projektion einer vertikalen Linie 23a und einer horizontalen Linie 23b ausgebildet. Von Laserkollimatoren ausgesandte Laserstrahlen werden mittels zylindrischen Linsen 22a und 22b aufgeweitet, sodass jeweils Linien auf eine Empfängerfläche projiziert werden.

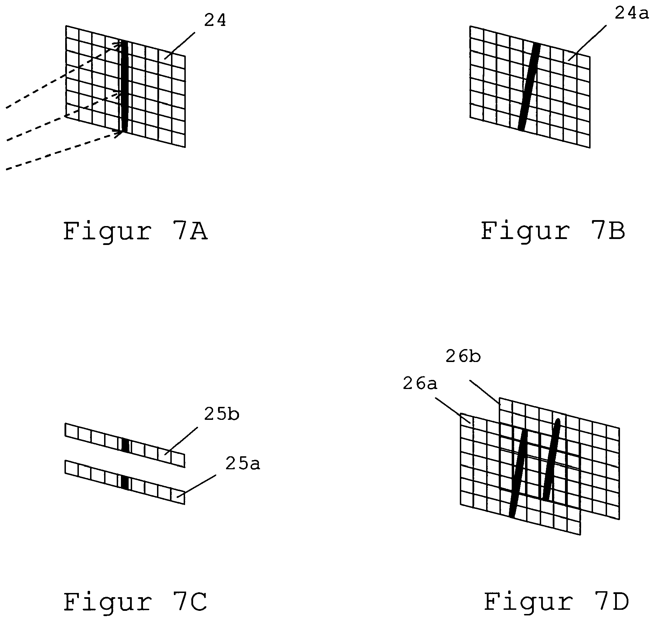

Die Figuren 7A bis 7H zeigen Ausführungsbeispiele von Strahlungsdetektoren, welche die Empfangskomponente oder einen Teil derselben bilden können, wobei die schwarzen Flächen jeweils auf dem jeweiligen Strahlungsdetektor abgebildete Leitstrahlen darstellen.

Im ersten Ausführungsbeispiel aus Figur 7A ist der Strahlungsdetektor als CCD-Flächensensor 24 ausgebildet. Anhand der Abbildung eines mittels elektromagnetischer Strahlung erzeugten Referenzsignals auf dem CCD-Flächensensor 24 ist erkennbar, dass die Sensorfläche senkrecht auf das zentrische Leitstrahlen-Signal ausgerichtet ist.

In Figur 7B dagegen ist in einem zweiten Ausführungsbeispiel die Leitstrahlen-Abbildung auf dem als CCD-Sensor 24a ausgebildeten Strahlungsdetektor aus ihrer zentrischen Lage gewandert, die Sensorfläche ist also gegen die Referenzsignal-Achse geneigt. Eine solche Abbildung des Signals wird beispielsweise dann erhalten, wenn der Detektor bzw. die erste oder zweite Einheit - in Referenz zu den obigen Ausführungen - quer zur Fahrtrichtung geneigt ist.

Figur 7C zeigt den Strahlungsdetektor in einem dritten Ausführungsbeispiel als Anordnung zweier CCD-Zeilensensoren 25a,25b. Das Bild des Leitstrahlen-Signals deutet auf eine korrekte Relativlage von Strahlungsdetektor und Leitstrahlgenerator hin.

Das vierte Ausführungsbeispiel aus Figur 7D stellt einen als Anordnung zweier matrizenförmiger CCD 26a,26b ausgebildeten Strahlungsdetektor dar. Die beiden CCD 26a,26b sind mit einem Zwischenraum in zwei Ebenen angeordnet. Mit einer derartigen räumlichen Anordnung ist sowohl eine Neigung der CCD 26a,26b - und der ersten bzw. zweiten Einheit - quer zur Fahrtrichtung als auch in Fahrtrichtung erfassbar. Die Grösse der Neigung ist beispielsweise anhand von Parametern wie Lichtintensität oder Exzentrizität der Position der Abbildung auf den CCD 26a,26b ermittelbar. Ebenso ist es möglich, die Neigung anhand einer zuvor vorgängig durchgeführten Kalibrierung zu bestimmen.

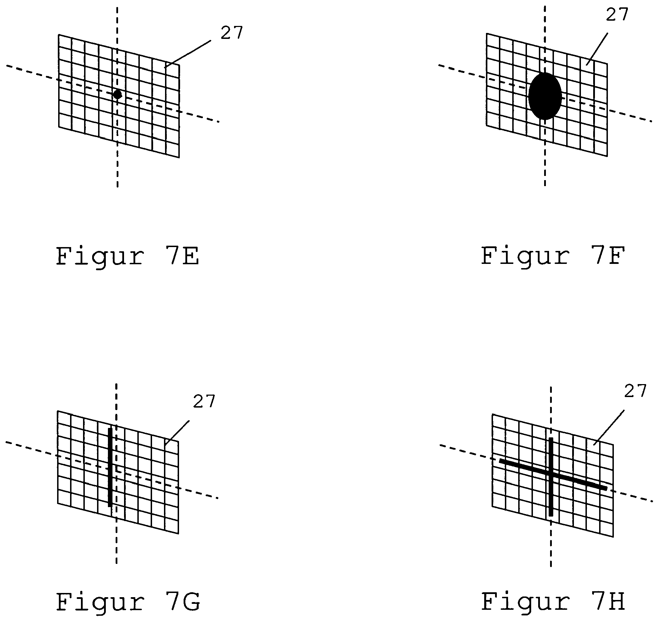

Die Figuren 7E bis 7H zeigen unterschiedliche Abbildungen von Leitstrahlen auf einem Strahlungsdetektor 27 der Empfangskomponente des optischen Leitsystems. Die gestrichelten Linien definieren jeweils die Null-Position respektive die Soll-Position bzgl. Richtung - senkrechte gestrichelte Linie - und Höhe - horizontale gestrichelte Linie. In Figur 7E ist die Abbildung eines kollimierten Leitstrahlbündels an den jeweiligen Null-Positionen gezeigt. Figur 7F zeigt die Abbildung eines kreisförmig aufgeweiteten Leitstrahlenbündels. In Figur 7G ist die Projektion einer senkrechten Linie gezeigt - die Linie weicht von der Null-Position leicht ab - mit einer entsprechenden Steueranweisung kann die Richtungsabweichung korrigiert werden. Figur 7H zeigt die Projektion einer senkrechten und einer horizontalen Linie - die beispielsweise mit einem Linienlaser entsprechend Figur 6 als Sendekomponente projiziert werden - die senkrechte Linie indiziert eine korrekte Fahrtrichtung, die horizontale Linie eine korrekte Arbeitshöhe.

## Patentansprüche

1. Einbauzug ausgebildet zum Erstellen
einer Belagschicht aus Beton- oder Asphalt-Material entlang eines vorgegebenen Weges (6,6'), wobei der Einbauzug aufweist
▪ wenigstens eine erste Einheit (1,1',11,11') mit wenigstens einem - insbesondere höhenverstellbaren - ersten Arbeitsteil (1a) zum Durchführen eines ersten Material-Bearbeitungsschritts - insbesondere Verteilen des Materials -,
▪ wenigstens eine zweite Einheit (2,2',12,12') mit einem höhenverstellbaren zweiten Arbeitsteil (2a) - insbesondere einer Bohle (2a,12a) - zum Durchführen eines zweiten Material-Bearbeitungsschritts, wobei die Einheiten unabhängig voneinander angetrieben und im Verband fahrbar sind, und
▪ ein optisches Leitsystem mit wenigstens einer an der zweiten Einheit (2,2',12,12') angebrachten Sendekomponente (3,3a,3b,3c,3e,3f,21) zum Senden optischer Referenzstrahlen (4,4c),
**dadurch gekennzeichnet, dass**
das optische Leitsystem aufweist
▪ wenigstens eine an der ersten Einheit (1,1',11,11') angebrachte
Empfangskomponente (5,5a,5b,5c,5d,5e,5f,24,24a,25a,25b,26a,26b,27) mit mehreren photosensitiven Empfangsbereichen zur Detektion der Referenzstrahlen (4,4c) und zur Ermittlung mindestens einer Auftreffposition der Referenzstrahlen (4,4c) auf der
Empfangskomponente (5,5a,5b,5c,5d,5e,5f,24,24a,25a,25b,26a,26b,27), sowie
▪ eine Rechenkomponente (19) zur Ableitung und Bereitstellung von Steueranweisungen für die erste und/oder zweite Einheit anhand der mindestens einen Auftreffposition.

2. Einbauzug nach Anspruch 1, **dadurch gekennzeichnet, dass**
die Rechenkomponente (19) - aus der mindestens einen Auftreffposition - eine relative Lage der beiden Einheiten zueinander ableitet, insbesondere hinsichtlich
▪ einer relativen horizontalen Ausrichtung der beiden Einheiten zueinander,
▪ einer relativen Höhe der beiden Einheiten zueinander,
▪ einem Parallelversatz bezüglich der Fahrtrichtung zwischen den beiden Einheiten,
▪ einer relativen Schräglage der beiden Einheiten zueinander und/oder
▪ einem Abstand zwischen den beiden Einheiten in Fahrtrichtung.

3. Einbauzug nach Anspruch 1, **dadurch gekennzeichnet, dass**
folgenden Anweisungen als die Steueranweisungen durch die Rechenkomponente (19) abgeleitet werden:
▪ Anweisungen betreffend die Fahrtrichtung der ersten und/oder zweiten Einheit,
▪ Anweisungen betreffend die horizontale ein- oder zweidimensionale Ausrichtung der ersten und/oder zweiten Einheit,
▪ Anweisungen betreffend die Arbeitshöhe des ersten und/oder zweiten Arbeitsteils (1a), und/oder
▪ Anweisungen betreffend die Fahrt-Geschwindigkeit der ersten und/oder zweiten Einheit, insbesondere hinsichtlich eines Abstands der beiden Einheiten.

4. Einbauzug nach einem der vorangehenden Ansprüche,
**dadurch gekennzeichnet, dass**
die wenigstens eine Sendekomponente (3,3a,3b,3c,3e,3f,21) als eine der folgenden Komponenten ausgebildet ist:
▪ Laserkomponente zum Senden eines kollimierten Laserstrahlenbündels,
▪ Laserkomponente (3a,3b,3e) zum Senden eines fächerförmig aufgeweiteten Laserstrahlenbündels (3e),
▪ Linienlaser (21),
▪ Laserkomponente zum Senden eines kreisförmig aufgeweiteten Laserstrahlenbündels,
▪ Rotationslaser (3c) zur Erzeugung einer Referenzstrahlebene oder
▪ Laserentfernungsmesser (3f).

5. Einbauzug nach einem der vorangehenden Ansprüche,
**dadurch gekennzeichnet, dass**
die wenigstens eine Empfangskomponente (5,5a,5b,5c,5d,5e,5f,24,24a,25a,25b,26a,26b,27) als eine der folgenden Komponenten ausgebildet ist:
▪ CCD-Zeilensensor (25a,25b) oder CCD-Flächensensor (24,26a,26b),
▪ einer Vielzahl von zeilen- oder flächenhaft angeordneten Photodioden,
▪ PSD-Sensor oder
▪ CMOS-Zeilensensor oder CMOS-Flächensensor.

6. Einbauzug nach einem der vorangehenden Ansprüche,
**dadurch gekennzeichnet, dass**
die erste Einheit (1,1',11,11') ein höhenverstellbares weiteres Arbeitseil (11b) zum Durchführen eines weiteren Material-Bearbeitungsschritts - insbesondere Abziehen des Materials - aufweist und die Rechenkomponente weiters zum Ableiten und Bereitstellen von Steueranweisungen betreffend die Arbeitshöhe des weiteren Arbeitsteils (11b) ausgebildet ist.

7. Einbauzug nach einem der vorangehenden Ansprüche,
**dadurch gekennzeichnet, dass**
die Empfangskomponente (5,5a,5b,5c,5d,5e,5f,24,24a,25a,25b,26a,26b,27) höhenverstellbar - insbesondere auf einer Schiene - auf der ersten Einheit (1,1',11,11') angeordnet ist.

8. Einbauzug nach einem der vorangehenden Ansprüche,
**dadurch gekennzeichnet, dass**
das optische Leitsystem mindestens zwei solcher Sendekomponenten und insbesondere mindestens zwei solcher Empfangskomponenten umfasst.

9. Einbauzug nach einem der vorangehenden Ansprüche,
**dadurch gekennzeichnet, dass**
an der zweiten Einheit (2,2',12,12') ein Positionsindikator (7,7',7d,7e) angeordnet ist, wobei über ein Positionsbestimmungssystem (8,8') - insbesondere eine Totalstation oder GPS - die absolute Position des Indikators bestimmbar ist, sodass anhand der absoluten Position und der - durch das relative optische Leitsystem abgeleiteten - relativen Lage der beiden Einheiten zueinander ein Bezug der relativen Positionen beider Einheiten zu einem äusseren Koordinatensystem herstellbar ist.

10. Einbauzug nach Anspruch 9, wobei die erste Einheit (1,1',11,11') der zweiten (2,2',12,12') Einheit im Benutzungszustand des Einbauzuges in einem vorgegebenen Abstand vorausfährt,
**dadurch gekennzeichnet, dass**
▪ der Rechenkomponente ein gespeichertes Modell im äusseren Koordinatensystem bezüglich der zu fertigenden Belagschicht bereitgestellt wird und
▪ die Rechenkomponente (19)
- anhand der absoluten Position des Positionsindikators und der abgeleiteten relativen Lage der beiden Einheit zueinander eine jeweilige Ist-Position der ersten Einheit (1,1',11,11') im äusseren Koordinatensystem ermittelt und anhand eines Vergleichsverfahrens der jeweiligen Ist-Position mit dem gespeicherten Modell die Steueranweisungen für die erste Einheit ableitet.

11. Einbauzug nach einem der vorangehenden Ansprüche,
**dadurch gekennzeichnet, dass**
an der zweiten Einheit (2,2',12,12') ein Positionsindikator (7,7',7d,7e) angeordnet ist, wobei über ein Positionsbestimmungssystem (8,8') - insbesondere eine Totalstation oder GPS - die absolute Position des Indikators bestimmbar ist, sodass anhand der absoluten Position und der - durch das relative optische Leitsystem abgeleiteten - relativen Lage der beiden Einheiten zueinander ein Bezug der relativen Positionen beider Einheiten zu einem äusseren Koordinatensystem herstellbar ist.

## Claims

1. A paving train for producing a surface layer comprising concrete or asphalt material along a predetermined path (6, 6'), the paving train having
▪ at least one first unit (1, 1', 11, 11') comprising at least one first working part (1a) - in particular adjustable in height - for carrying out a first material processing step - in particular distribution of the material -, and
▪ at least one second unit (2, 2', 12, 12') comprising a second working part (2a) adjustable in height - in particular a screed (2a, 12a) - for carrying out a second material processing step, the units being driven independently of one another and being capable of travelling in formation,
▪ an optical guidance system with at least one transmitter component (3, 3a, 3b, 3c, 3e, 3f, 21) mounted on the second unit (2, 2', 12, 12') for transmitting optical reference beams (4, 4c),
**characterized in that**
the optical guidance system comprises
▪ at least one receiver component (5, 5a, 5b, 5c, 5d, 5e, 5f, 24, 24a, 25a, 25b, 26a, 26b, 27) mounted on the first unit (1, 1', 11, 11') comprising a plurality of photosensitive receiving regions for detecting the reference beams (4, 4c) and for determining at least one incidence position of the reference beams (4, 4c) on the receiver component (5, 5a, 5b, 5c, 5d, 5e, 5f, 24, 24a, 25a, 25b, 26a, 26b, 27) and
▪ a computer unit (19) for deriving and providing control instructions for the first and/or second unit on the basis of the at least one incidence position.

2. Paving train according to Claim 1,
**characterized in that**
the computer component (19) derives - from the at least one incidence position - a relative attitude of the two units, in particular with respect to
▪ a horizontal orientation of the two units relative to one another,
▪ a height of the two units relative to one another,
▪ a parallel offset relative to the direction of travel between the two units,
▪ a skew position of the two units relative to one another and/or
▪ a distance between the two units in the direction of travel.

3. Paving train according to Claim 1,
**characterized in that**
the following instructions are derived as the control instructions by the computer component (19):
▪ instructions relating to the direction of travel of the first and/or second unit,
▪ instructions relating to the horizontal one-dimensional or two-dimensional orientation of the first and/or second unit,
▪ instructions relating to the working height of the first and/or second working part (1a) and/or
▪ instructions relating to the travelling speed of the first and/or second unit, in particular with respect to the distance between the two units.

4. Paving train according to any of the preceding claims,
**characterized in that**
the at least one transmitter component (3, 3a, 3b, 3c, 3e, 3f, 21) is in the form of one of the following components:
▪ laser component for transmitting a collimated laser beam,
▪ laser component (3a, 3b, 3e) for transmitting a laser beam (3e) made to diverge in a fan-like manner,
▪ line laser (21),
▪ laser component for transmitting a circularly divergent laser beam,
▪ rotary laser (3c) for producing a reference beam plane or
▪ laser rangefinder (3f).

5. Paving train according to any of the preceding claims,
**characterized in that**
the at least one receiver component (5, 5a, 5b, 5c, 5d, 5e, 5f, 24, 24a, 25a, 25b, 26a, 26b, 27) is in the form of one of the following components:
▪ CCD line sensor (25a, 25b) or CCD area sensor (24, 26a, 26b),
▪ a multiplicity of photodiodes arranged along the line or over an area,
▪ PSD sensor or
▪ CMOS line sensor or CMOS area sensor.

6. Paving train according to any of the preceding claims,
**characterized in that**
the first unit (1, 1', 11, 11') has a further working part (11b) which is adjustable in height and intended for carrying out a further material processing step - in particular spreading material - and the computer component is furthermore configured for deriving and providing control instructions relating to the working height of the further working part (11b).

7. Paving train according to any of the preceding claims,
**characterized in that**
the receiver component (5, 5a, 5b, 5c, 5d, 5e, 5f, 24, 24a, 25a, 25b, 26a, 26b, 27) is arranged so as to be adjustable in height - in particular on a rail - on the first unit (1, 1', 11, 11').

8. Paving train according to any of the preceding claims,
**characterized in that**
the optical guidance system comprises at least two such transmitter components and in particular at least two such receiver components.

9. Paving train according to any of the preceding claims,
**characterized in that**
a position indicator 7, 7', 7d, 7e) is arranged on the second unit (2, 2', 12, 12'), the absolute position of the indicator being capable of being determined via a position determination system (8, 8') - in particular a total station or GPS - so that a reference of the relative positions of the two units to an external coordinate system can be produced on the basis of the absolute position and the relative attitude - derived by the relative optical guidance system - of the two units to one another.

10. Paving train according to Claim 9, the first unit (1, 1', 11, 11') travelling, in a use state of the paving train, ahead of the second unit (2, 2', 12, 12') at a predetermined distance,
**characterized in that**
▪ a stored model in the external coordinate system with regard to the surface layer to be finished is provided to the computer component and
▪ the computer component (19)
o determines a respective actual position of the first unit (1, 1', 11, 11') in the external coordinate system on the basis of the absolute position of the position indicator and the derived relative attitude of the two units to one another and derives the control instructions for the first unit on the basis of a method for comparing the respective actual position with the stored model.

11. Paving train according to any of the preceding claims,
**characterized in that**
a position indicator (7, 7', 7d, 7e) is arranged on the second unit (2, 2', 12, 12'), the absolute position of the indicator being capable of being determined via a position determination system (8, 8') - in particular a total station or GPS - so that a reference of the relative positions of the two units to an external coordinate system can be produced on the basis of the absolute position and the relative attitude - derived by the relative optical guidance system - of the two units to one another.

## Revendications

1. Train de finisseuses pour la fabrication d'une couche de revêtement en matériau à base de béton ou d'asphalte le long d'une voie prédéfinie (6, 6'), le train de finisseuses présentant
▪ au moins une première unité (1, 1', 11, 11') avec au moins une première partie de travail (1a) - en particulier réglable en hauteur - pour exécuter une première étape de traitement du matériau - en particulier la distribution du matériau - et
▪ au moins une seconde unité (2, 2', 12, 12') avec une seconde partie de travail réglable en hauteur (2a) - en particulier une table (2a, 12a) - pour exécuter une seconde étape de traitement du matériau, les unités étant entraînées indépendamment l'une de l'autre et pouvant être mobiles en étant associées,
▪ un système de guidage optique avec au moins un composant émetteur (3, 3a, 3b, 3c, 3e, 3f, 21) fixé sur la seconde unité (2, 2', 12, 12') pour émettre des faisceaux optiques de référence (4, 4c), **caractérisé en ce que** le système de guidage présente
▪ au moins un composant récepteur (5, 5a, 5b, 5c, 5d, 5e, 5f, 24, 24a, 25a, 25b, 26a, 26b, 27) fixé à la première unité (1, 1', 11, 11') avec plusieurs zones de réception photosensibles pour la détection des faisceaux de référence (4, 4c) et pour déterminer au moins une position d'impact des faisceaux de référence (4, 4c) sur le composant récepteur (5, 5a, 5b, 5c, 5d, 5e, 5f, 24, 24a, 25a, 25b, 26a, 26b, 27) ainsi
▪ qu'un composant de calcul (19) pour dériver et mettre à disposition des instructions de commande pour la première et/ou la seconde unité à l'aide de la au moins une position d'impact.

2. Train de finisseuses selon la revendication 1, **caractérisé en ce que** le composant de calcul (19) dérive une position relative des deux unités l'une par rapport à l'autre - à partir de la au moins une position d'impact - en particulier pour ce qui est
▪ d'une orientation horizontale relative des deux unités l'une par rapport à l'autre,
▪ d'une hauteur relative des deux unités l'une par rapport à l'autre,
▪ d'un désalignement parallèle par rapport au sens de la marche entre les deux unités,
▪ d'une position oblique relative des deux unités l'une par rapport à l'autre et/ou
▪ d'une distance entre les deux unités dans le sens de la marche.

3. Train de finisseuses selon la revendication 1, **caractérisé en ce que** les instructions suivantes sont dérivées par le composant de calcul (19) en tant qu'instructions de commande :
▪ instructions concernant le sens de la marche de la première et/ou de la seconde unité,
▪ instructions concernant l'orientation horizontale unidimensionnelle ou bidimensionnelle de la première et/ou de la seconde unité,
▪ instructions concernant la hauteur de travail de la première et/ou de la seconde partie de travail (1a) et/ou
▪ instructions concernant la vitesse de déplacement de la première et/ou de la seconde unité, en particulier en ce qui concerne une distance des deux unités.

4. Train de finisseuses selon l'une des revendications précédentes, **caractérisé en ce que** le au moins un composant émetteur (3, 3a, 3b, 3c, 3e, 3f, 21) est configuré comme l'un des composants suivants :
▪ composant laser pour émettre un faisceau de rayons laser collimatés,
▪ composant laser (3a, 3b, 3e) pour émettre un faisceau de rayons laser élargi en éventail (3e),
▪ laser à ligne (21),
▪ composant laser pour émettre un faisceau de rayons laser élargi de manière circulaire,
▪ laser rotatif (3c) pour générer un plan de faisceau de référence ou
▪ télémètre laser (3f).

5. Train de finisseuses selon l'une des revendications précédentes, **caractérisé en ce que** le au moins un composant récepteur (5, 5a, 5b, 5c, 5d, 5e, 5f, 24, 24a, 25a, 25b, 26a, 26b, 27) est configuré comme l'un des composants suivants :
▪ capteur linéaire CCD (25a, 25b) ou capteur de surface CCD (24, 26a, 26b),
▪ une multitude de photodiodes placées en ligne ou en forme de surface
▪ capteur PSD ou
▪ capteur linéaire CMOS ou capteur de surface CMOS.

6. Train de finisseuses selon l'une des revendications précédentes, **caractérisé en ce que** la première unité (1, 1', 11, 11') présente une autre première partie de travail réglable en hauteur (11b) pour exécuter une autre étape de traitement du matériau - en particulier lissage du matériau - et le composant de calcul est de plus configuré pour dériver et mettre à disposition des instructions de commande concernant la hauteur de travail de l'autre partie de travail (11b).

7. Train de finisseuses selon l'une des revendications précédentes, **caractérisé en ce que** le composant récepteur (5, 5a, 5b, 5c, 5d, 5e, 5f, 24, 24a, 25a, 25b, 26a, 26b, 27) est placé réglable en hauteur sur la première unité (1, 1', 11, 11') - en particulier sur un rail.

8. Train de finisseuses selon l'une des revendications précédentes, **caractérisé en ce que** le système de guidage optique comprend au moins deux de ces composants émetteurs et en particulier au moins deux de ces composants récepteurs.

9. Train de finisseuses selon l'une des revendications précédentes, **caractérisé en ce qu'**un indicateur de position (7, 7', 7d, 7e) est placé sur la seconde unité (2, 2', 12, 12'), cependant que la position absolue de l'indicateur peut être déterminée par un système de détermination de position (8, 8') - en particulier une station totale ou GPS - si bien qu'une référence des positions relatives des deux unités par rapport à un système de coordonnées extérieur peut être réalisée à l'aide de la position absolue et de la position relative des deux unités l'une par rapport à l'autre - dérivée par le système de guidage optique relatif.

10. Train de finisseuses selon la revendication 9, **caractérisé en ce que** la première unité (1, 1', 11, 11') précède la seconde unité (2, 2', 12, 12') à une distance prédéterminée, lorsque le train de finisseuses est en état d'utilisation, caractérisé en ce
▪ qu'un modèle mémorisé est mis à disposition du composant de calcul dans le système de coordonnées extérieur pour ce qui est de la couche de revêtement à fabriquer et que
▪ le composant de calcul (19)
- détermine, à l'aide de la position absolue de l'indicateur de position et de la position relative dérive des deux unités l'une par rapport à l'autre, une position réelle respective de la première unité (1, 1', 11, 11') dans le système de coordonnées extérieur et dérive, à l'aide d'une méthode de comparaison de la position réelle respective avec le modèle mémorisé, les instructions de commande pour la première unité.

11. Train de finisseuses selon l'une des revendications précédentes, **caractérisé en ce qu'**un indicateur de position (7, 7', 7d, 7e) est placé sur la seconde unité (2, 2', 12, 12'), cependant que la position absolue de l'indicateur peut être déterminée par un système de détermination de position (8, 8') - en particulier une station totale ou GPS - si bien qu'une référence des positions relatives des deux unités par rapport à un système de coordonnées extérieur peut être réalisée à l'aide de la position absolue et de la position relative des deux unités l'une par rapport à l'autre - dérivée par le système de guidage optique relatif.
